# EUROPÄISCHE PATENTSCHRIFT

(11) **EP 1 724 453 B1**
(45) Veröffentlichungstag und Bekanntmachung des Hinweises auf die Patenterteilung: **05.11.2008**
(21) Anmeldenummer: 06010211.8
(22) Anmeldetag: 18.05.2006
(51) Int. Cl.: F02B 37/00, F02M 25/07, F02M 35/022, F01N 3/00, F02B 29/04

(54) **Turboladeranordnung und Verfahren zum Betreiben eines Turboladers**
Turbocharge arrangement and method for operating the same
Mécanisme de turbocompresseur et procédé d'utilisation de celui-ci

(30) Priorität: 20.05.2005 DE 102005023958
(43) Veröffentlichungstag der Anmeldung: 22.11.2006
(73) Patentinhaber: Behr GmbH & Co. KG, 70469 Stuttgart (DE)
(72) Erfinder: Eitel, Jochen, Dipl.-Ing., 73266 Bissingen (DE); Fränkle, Gerhard, Dr., 73630 Remshalden (DE); Lutz, Rainer, Dipl.-Ing., 71711 Steinheim (DE); Müller, Rolf Dipl.-Ing., 71642 Ludwigsburg (DE); Pantow, Eberhard, Dr.-Ing., 71696 Möglingen (DE)
(74) Vertreter: Mantel, Berthold Friedrich

(56) Entgegenhaltungen:
- EP-A- 1 548 269
- WO-A-20/06045488
- US-A1- 2004 050 373
- US-A1- 2004 079 079
- US-B1- 6 367 256

## Beschreibung

Die Erfindung betrifft ein Turboladeranordnung und ein Verfahren zum Betreiben eines Turboladers gemäß dem Oberbegriff des Anspruches 1 bzw. des Anspruches 22.

Zur Verringerung der Partikel- und Stickoxidemission bei Dieselmotoren ist die Rückführung von Abgas bekannt, wobei sowohl eine Hochdruck-Abgasrückführung als auch eine Niederdruck-Abgasrückführung möglich ist. Dabei wird der Abgasstrom auf Temperaturen von ca. 150°C bis 200°C abgekühlt und der Ansaugluft zugemischt. Als Kühlmedium im Abgaskühler wird bei diesen Temperaturen der gekühlten Ansaugluft in der Regel ein Teilstrom des Motor-Kühlmittels verwendet, jedoch ist auch die Verwendung anderer Kühlmittel bekannt. Die Abgasrückführung ist um so wirkungsvoller, je niedriger die Gasaustrittstemperaturen am Abgaskühler sind.

Bei der Hochdruck-Abgasrückführung wird üblicherweise Abgas vor der Turbine entnommen und der Ladeluft nach dem Ladeluftkühler zugeführt. Die Kühlung des rückgeführten Abgases erfolgt durch das heiße Motor-Kühlmittel, so dass auf Grund der hohen Temperaturen üblicherweise kein Abgaskondensat entsteht. Die Hochdruck-Abgasrückführung erreicht eine deutliche Verringerung der Stickoxidemission, allerdings verbunden mit einem gleichzeitigen Anstieg der Partikelemission. Die Partikel- oder Feinstaubemission kann durch Partikelfilter verringert werden.

Bei der Niederdruck-Abgasrückführung wird das Abgas nach der Turbine, bevorzugt nach einem Partikelfilter, dem Abgasstrom entnommen, abgekühlt und dem Verdichter saugseitig zugeführt. Auf Grund der stärkeren Abkühlung des zurückgeführten Abgases ist eine weitere Verminderung der Stickoxidemission möglich, jedoch bildet sich auf Grund der starken Abkühlung des rückgeführten Abgases sich Kondensat, welches stark sauer ist, was im Wesentlichen auf die gebildete Salpetersäure HNO₃ zurückgeht, so dass es zu Korrosion kommt. Wird Kondensatnebel dem Verdichter zugeführt, so kann dieser zudem den Verdichter wegen dessen hoher Drehzahl (ca. 120000 bis 150000 U/min) beschädigen.

Bei Nutzfahrzeugen ist neben der Abgasrückführung zur Verringerung der Stickoxidemission auch das SCR Verfahren (Selective Catalytic Reduction) bekannt, bei dem entweder aus Ammonium-Carbamat oder wässriger Harnstofflösung Ammoniak erzeugt wird, welches das vom Motor erzeugte Stickoxid in die unschädlichen Komponenten Stickstoff und Wasser katalytisch umwandelt. Dieses Verfahren hat jedoch den Nachteil, dass ein zusätzlicher Betriebsstoff im Fahrzeug mitgeführt werden muss.

In der US 6,367,256 B1 ist ein System zur Rückführung von Abgas offenbart, mit einem EGR-Kreislauf, sowie einem EGR-Kühler, wobei ein Kondensatabscheider zum Sammeln von EGR-Kondensat, das anschließend mittels eines elektrischen Heizers verdampft wird offenbart ist.

Die US 2004/0079079 A1 offenbart ein Ladeluft-Kondensationstrennsystem für einen turboaufgeladenen Motor. Das System weist einen Sammelbehälter zum Sammeln von Kondensat auf.

Die US 2004/0050373 A1 offenbart eine Vorrichtung und ein Verfahren zur Lebensverlängerung eines Dieselmotors, mit einem Abgasrückführsystem (EGR). Das System weist dabei einen chemischen Filter/ Abscheider in einem EGR-Strom auf zur Entfernung von säurehaltigen Komponenten.

Ausgehend von diesem Stand der Technik ist es Aufgabe der Erfindung, eine verbesserte Turboladeranordnung und ein Verfahren zum Betreiben eines Turboladers zur Verfügung zu stellen, bei der Korrosion vermieden und das anfallende Kondensat umweltfreundlich entsorgt werden kann. Diese Aufgabe wird gelöst durch eine Turboladeranordnung und ein Verfahren mit den Merkmalen des Anspruchs 1 bzw. des Anspruches 21. Vorteilhafte Ausgestaltungen sind Gegenstand der Unteransprüche.

Im Folgenden soll unter Ladeluft sowohl die Ansaugluft als auch der mit der rückgeführten Abgas gemischte Ansaugluft verstanden werden.

Erfindungsgemäß ist eine Turboladeranordnung, insbesondere eines Kraftfahrzeugs mit einem Verbrennungsmotor, mit Abgasrückführung vorgesehen, wobei die Anordnung einen Abgaskühler und einen Ladeluftkühler zur Kühlung von rückgeführtem Abgas und/oder Ladeluft und ein Verdichter zur Verdichtung der Ladeluft sowie einen Kondensatabscheider aufweist. Durch den Kondensatabscheider kann der sich in dem Kondensat, welches sich bei Erreichen und Unterschreiten der Taupunkttemperatur bildet, befindliche korrosive Anteil des Abgases aus dem Abgasstrom oder dem Ladeluftstrom entfernt und sichergestellt werden, dass im folgenden Bereich sich kein oder nur minimal Kondensat sammelt, welches eine gegebenenfalls stattfindende Korrosion der Bauteile fördert. Der Kondensatabscheider ist hierbei nach dem Ladeluftkühler und/oder direkt vor dem Ladeluft-Verdichter angeordnet. Um das Kondensat umweltfreundlich zu entsorgen, ist erfindungsgemäß ein thermische Kondensatentsorgung vorgesehen, welche eine Entgiftung des Kondensats ermöglicht, so dass die im Kondensat enthaltenen Säuren, insbesondere die Salpetersäure, die Schwefelsäure und die schwefelige Säure, in deren ungefährliche Gase und Wasser umgewandelt werden. Diese können anschließend dem Abgas beigegeben und an die Umgebung über den Auspuff abgegeben werden.

Die thermische Kondensatentsorgung ist bevorzugt mehrstufig, insbesondere dreistufig, ausgebildet. Als erste Stufe ist hierbei bevorzugt ein abgasbeheizter Wärmetauscher für die Erwärmung des Kondensats vorgesehen. Als zweite Stufe ist bevorzugt ein thermischer Reaktor vorgesehen, welcher vorzugsweise ein PTC-Heizelement umfasst und selbsttätig abregelt, wenn kein Kondensat anfällt. Als dritte Stufe ist vorzugsweise weiterer thermischer Reaktor für eine Resterhitzung vorgesehen, insbesondere in Form eines elektrischen Heizkörpers, der das verdampfte Kondensat auf 350 bis 450°C erhitzt, so dass der Salpetersäure-Dampf sich in seine unschädlichen Komponenten Stickstoff, Wasser und Sauerstoff umwandelt. Insbesondere im thermischen Reaktor der dritten Stufe sind vorzugsweise Einbauten zur Oberflächenvergrößerung vorgesehen, so dass der chemische Prozessablauf optimiert werden kann. Es kann für jeden Kondensatabscheider eine thermische Kondensatentsorgung vorgesehen sein, vorzugsweise ist jedoch eine gemeinsame Kondensatentsorgung für mehrere Kondensatabscheider vorgesehen.

Die Heizung der thermischen Kondensatentsorgung kann bevorzugt bei niedrigen Betriebstemperaturen (122°C), die zur NO₂-Bildung führen, getaktet betrieben werden, um eine beispielsweise lastabhängige Dosierung des NO₂ zu ermöglichen, so dass die NOₓ-Grenzwerte eingehalten werden.

Ebenfalls kann ein Zusatzgebläse vorgesehen sein, welches die Einhaltung der MAK-Werte sicherstellt, unabhängig von der Funktion der Kondensatentsorgung.

Vorzugsweise sind zwischen Kondensatabscheider und Kondensatentsorgung Leitungen vorgesehen, welche in Folge von Kapillarkräften und/oder deren Anordnung eine automatische Förderwirkung haben, so dass auf Pumpen verzichtet werden kann.

Beim Kondensatabscheider kann es sich bevorzugt um einen ein Fliehkraft- oder Zyklonabscheider handeln. Alternativ ist auch die Verwendung eines anderen Turbulenzerzeugers möglich, welcher in einem Luftstrom befindliche Kondensattröpfchen nach außen fördert, so dass sie abgeführt werden können. Beliebige andere gleichwirkende Vorrichtungen sind ebenfalls möglich.

Femer ist die Verwendung eines Filters, beispielsweise aus Edelstahl- oder aus Kunststoffgewebe bzw. -vlies, der als Kondensatabscheider dient, möglich.

In allen Fällen kann die Kondensatabscheidung zur Erhöhung der Effektivität mehrstufig erfolgen. Dabei können auch unterschiedliche Kondensatabscheider beliebig miteinander kombiniert werden.

Um das Kondensat aus einem Sammelbehälter o.ä. ableiten zu können, ist bevorzugt ein Ventil zur Drosselung des Abgasstroms oder des Ladeluftstroms vorgesehen, so dass das Druckniveau angehoben und das Kondensat ohne zusätzliche Hilfsmittel abgeleitet werden kann. Alternativ ist auch die Verwendung von Hilfsmitteln, wie beispielsweise einer Pumpe oder einer sonstigen Anordnung, welche eine befristete Druckerhöhung im Sammelbehälter ermöglicht, möglich.

Am Kondensatabfluss kann ein Rückschlagventil vorgesehen sein, welches ein Ausströmen des Kondensats ermöglicht, jedoch ein Rückströmen von Kondensat und/oder Luft von außen verhindert.

Ferner kann der Kondensatabfluss ein derartiges Ablaufgefälle aufweisen, dass die Gewichtskraft auf das Kondensat mindestens dem Ansaugdruck entspricht, so dass ein Rücksaugen von Kondensat verhindert werden kann.

Der Kondensatabscheider ist bevorzug direkt nach dem Kühler, insbesondere bevorzugt direkt nach dem Abgaskühler, angeordnet. Ebenfalls ist eine Anordnung nach dem Ladeluftkühler sinnvoll. Um den Verdichter vor Beschädigungen durch Kondensattröpfchen zu schützen, ist auch eine Anordnung direkt vor dem Verdichter sinnvoll. Hierbei kann die Welle des Verdichters vorteilhafterweise als Antrieb oder Teil eines Fliehkraftabscheiders verwendet werden.

Der Kondensatabscheider muss zudem in einem Bereich angeordnet sein, in welchem Kondensattröpfchen vorhanden sind. Dies ist üblicherweise in einem Bereich der Fall, in welchem die Temperatur des Abgasstroms oder des Ladeluftstroms den Taupunkt (unter Berücksichtigung der sonstigen Parameter, wie insbesondere Druck und chemische Zusammensetzung) erreicht oder unterschreitet.

Das Abgas oder die Ladeluft wird erfindungsgemäß in einem Bereich, in welchem das Abgas oder die Ladeluft eine Temperatur aufweist, welche dem Taupunkt entspricht oder denselben unterschreitet, umgelenkt, insbesondere mit einer Geschwindigkeitskomponente in tangentialer Richtung beaufschlagt, so dass bevorzugt der Längsbewegung eine Rotationsbewegung überlagert wird, jedoch kann auch eine Umlenkung des Luftstroms ausreichend sein. Durch die Geschwindigkeitskomponente in tangentialer Richtung werden die sich bildenden Kondensattröpfchen nach außen bewegt und können sich an der Wand ablagern, von wo sie sich sammeln, weitergeleitet und abgeführt werden können. Bevorzugt ist die mittlere tangentiale Geschwindigkeitskomponente im Bereich der Kondensatabscheidung mindestens so groß wie die mittlere Geschwindigkeitskomponente in Längsrichtung, bevorzugt mindestens doppelt so groß.

Der Kondensatabscheider ist vorzugsweise mit der Welle des Verdichters gekoppelt oder fest verbunden, so dass eine hohe Drehzahl mit geringem konstruktiven Aufwand und ohne Zusatzantrieb möglich ist.

Bevorzugt weist der Kondensatabscheider einen Verdränger- oder Schleuderkörper auf, der auf der Welle drehfest angeordnet oder durch einen Bereich der Welle gebildet ist. Dieser mitlaufende Körper ist bevorzugt aus einem Leichtmetall oder einer Leichtmetalllegierung, wie Aluminium, Titan oder Magnesium, oder aus einem Kunststoff gefertigt. Alternativ oder zusätzlich kann er eine Oberflächenbeschichtung, beispielsweise eine Oxal-Schicht, ausweisen, die ihn vor Korrosion schützt. Der Körper ist vorzugsweise strömungstechnisch derart ausgebildet, dass er trotz der Umlenkung keine Verwirbelungen erzeugt. Ferner ist er in Hinblick auf seine Masse zur Vermeidung von Massenkräften minimiert.

Der Verdränger- oder Schleuderkörper ist vorzugsweise in normaler Strömungsrichtung der Ladeluft vor dem Laufrad des Verdichters angeordnet und lenkt vorzugsweise den Ladeluftstrom um mindestens 90°, vorzugsweise um zweimal 180°, um. Insbesondere eine Z-artige Umlenkung um zweimal ca. 180° führt zu einer sehr guten Abscheidung der Kondensattropfen, wobei sich ein Teil der Kondensattropfen am Körper abschlagen und von dort in Folge der Fliehkraft an die innere Kanal- oder Gehäusewand geschleudert werden. Dabei kann die kinetische Energie der Kondensattropfen für ein Abführen des Kondensats aus dem Innenraum verwendet werden.

Der Kondensatabscheider ist vorzugsweise in dem Verdichtergehäuse angeordnet und/oder in das Verdichtergehäuse integriert ausgebildet. Dabei weist das Verdichtergehäuse vorzugsweise Bohrungen für den Kondensatablauf auf.

Im Folgenden werden Turboladeranordnungen anhand mehrerer Ausführungsbeispiele unter Bezugnahme auf die Zeichnung im Einzelnen erläutert.
Es zeigen:
- Fig. 1: eine schematische Prinzipdarstellung einer Vorrichtung zur Kühlung von Abgas, wie sie in einer erfindungsgemäßen Turboladeranordnung verwendet werden kann,
- Fig. 2: eine schematische Ansicht eines ersten Ausführungsbeispiels,
- Fig. 3: eine schematische Ansicht eines zweiten Ausführungsbeispiels,
- Fig. 4: eine schematische Ansicht eines dritten Ausführungsbeispiels,
- Fig. 5: eine schematische Ansicht eines vierten Ausführungsbeispiels,
- Fig. 6: eine schematische Ansicht eines fünften Ausführungsbeispiels,
- Fig. 7: eine schematische Darstellung einer Turboladeranordnung mit Hochdruck-Abgasrückführung,
- Fig. 8: eine schematische Darstellung einer Turboladeranordnung mit Niederdruck-Abgasrückführung,
- Fig.9: eine schematische Ansicht eines siebten Ausführungsbeispiels mit einer ersten Variante eines Fliehkraftabscheiders,
- Fig. 10: eine schematische Ansicht eines achten Ausführungsbeispiels mit einer zweiten Variante eines Fliehkraftabscheiders,
- Fig. 11: eine schematische Darstellung einer Turboladeranordnung mit Niederdruck-Abgasrückführung mit zweistufiger Kühlung des rückgeführten Abgases,
- Fig. 12: eine schematische Darstellung einer Turboladeranordnung mit Niederdruck-Abgasrückführung mit thermischer Kondensatentsorgung, und
- Fig. 13: eine schematische Detaildarstellung der erfindungsgemäßen thermischen Kondensatentsorgung von Fig. 12.

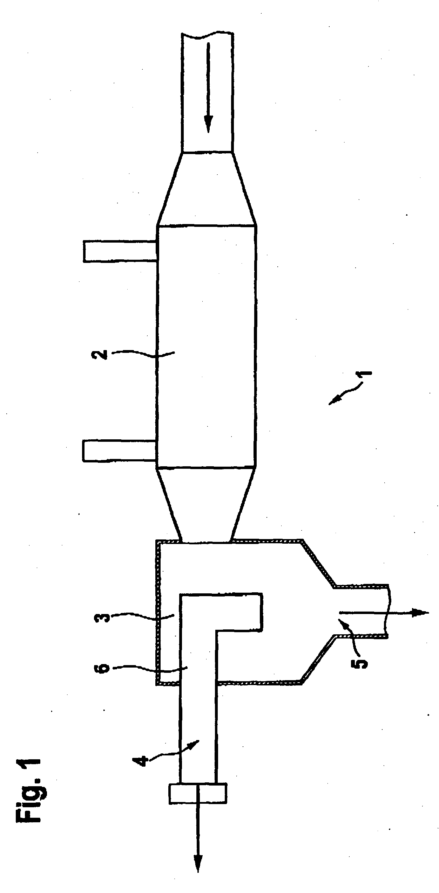

Fig. 1 zeigt einen kleinen Ausschnitt aus einer Turboladeranordnung. Hierbei ist eine Vorrichtung 1 zur Kühlung von rückgeführtem Abgas eines Kraftfahrzeugs mit einem Verbrennungsmotor dargestellt, die einen einem kältemittelgekühlten Abgaskühler 2 nachgeordnet angeordneten Kondensatabscheider 3 mit einer Abgasauslass 4 und einem Kondensatablauf 5 aufweist. In Fig. 1 ist die Strömungsrichtung des Abgasstroms durch Pfeile angedeutet Die Funktion, wie auch die der im Folgenden beschriebenen Ausführungsbeispiele eins bis fünf ist jeweils die Gleiche, nämlich dem durch den Abgaskühler 2 auf ca. 150°C (Temperatur unter Taupunkt unter Berücksichtigung der sonstigen Parameter, wie insbesondere Druck und chemische Zusammensetzung) abgekühlten Abgasstrom wird direkt nach dem Austritt aus dem Abgaskühler 2 die Feuchtigkeit durch den Kondensatabscheider 3 soweit möglich entzogen. Der trockene Abgasstrom gelangt über ein Tauchrohr 6 aus dem Kondensatabscheider 3 und wird anschließend mit der Ansaugluft gemischt. Der hieraus resultierende Ladeluftstrom wird weiter verdichtet, im Ladeluftkühler gekühlt und anschließend dem Turbolader (nicht dargestellt) zugeführt.

Vorliegend hat der rückgeführte Abgasstrom vor dem Abzweigen vom Gesamtabgasstrom einen Partikelfilter durchlaufen, so dass neben dem Kondensat möglichst keine Partikel, insbesondere keine größeren Partikel, abgeschieden werden, welche sich ablagem und dadurch den Wartungsaufwand erhöhen. Insbesondere kleine Partikel können jedoch als Kondensationskeime dienen und sich positiv auf die Kondensation auswirken.

Dabei erfolgt die Abscheidung der Kondensattröpfchen gemäß den folgenden fünf Ausführungsbeispielen im Kondensatabscheider 3 durch eine Versetzung des Abgasstroms in Rotation, so dass die Kondensattröpfchen nicht nur in axialer Richtung vom Abgasstrom mitgenommen sondern insbesondere auch nach außen gefördert werden und sich weitestgehend an der Wand ansammeln, von wo sie in Folge der Schwerkraft nach unten sinken und so abgeführt werden können. Der Druckverlust durch den Kondensatabscheider 3 ist hierbei relativ gering. In Folge der Abscheidung des aggressiven Kondensats werden die dahinter angeordneten Bauteile geschützt, so dass die Korrosionsgefahr deutlich gesenkt werden kann.

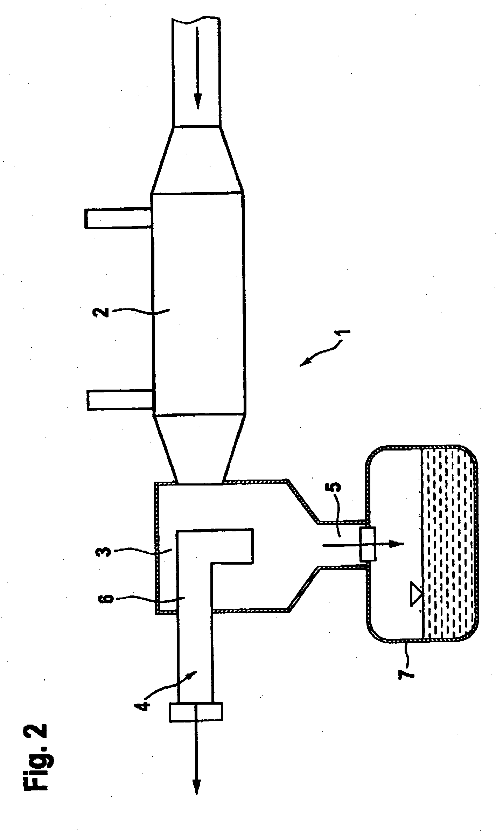

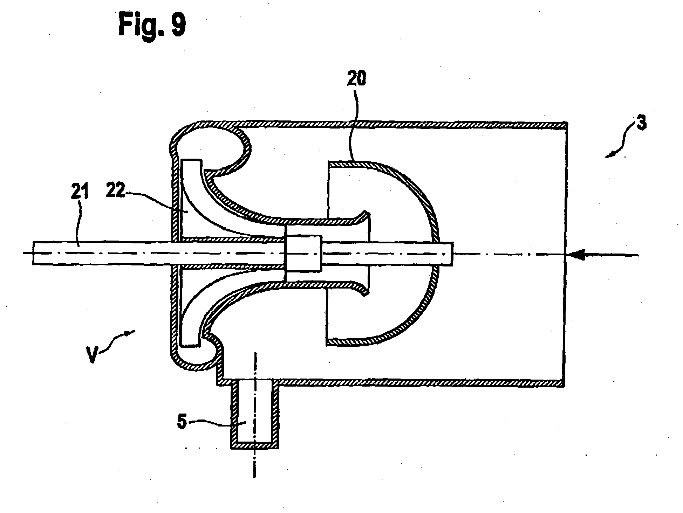

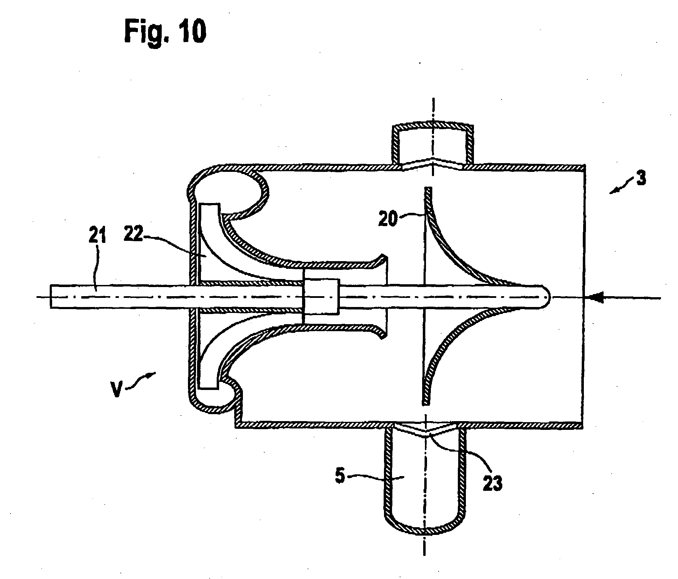

Gemäß dem ersten, in Fig. 2 dargestellten Ausführungsbeispiel ist ein im Prinzip herkömmlicher Fliehkraftabscheider als Kondensatabscheider 3 vorgesehen, welcher Teil der Vorrichtung 1 ist. Das sich niederschlagende Kondensat fließt in Folge der Schwerkraft durch den Kondensatablauf 5 nach unten, wo eine Öffnung mit einem Sammelbehälter 7 angeordnet ist, in welchem das Kondensat gesammelt wird. Der Sammelbehälter 7 wird bei Bedarf geleert. Hierbei ist zu beachten, dass im Vergleich zur Umgebung ein Unterdruck herrscht, so dass das Kondensat abgesaugt werden muss, sofern keine Druckerhöhung, beispielsweise durch Stoppen des Abgasstroms, erfolgt. Eine detaillierte Beschreibung möglicher Fliehkraftabscheider erfolgt an späterer Stelle unter Bezugnahme auf die Figuren 9 und 10.

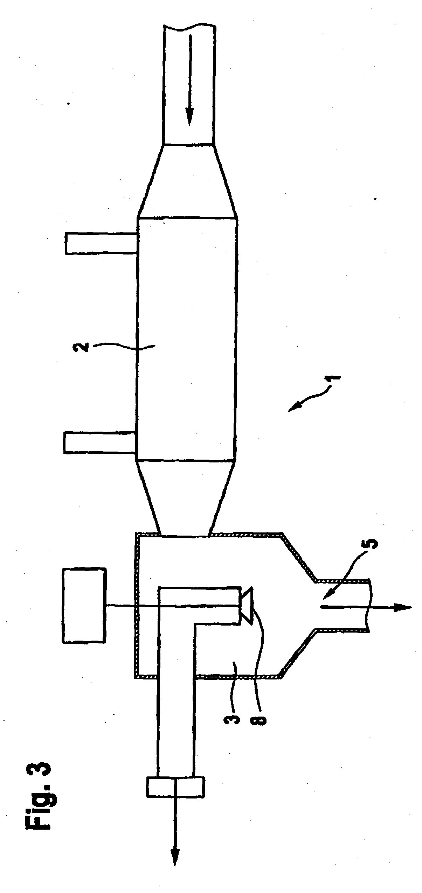

Um eine Druckerhöhung zu bewirken, ist gemäß dem in Fig. 3 dargestellten zweiten Ausführungsbeispiel ein im Abgasstrom angeordnetes Absperrventil 8 vorgesehen. Soll das Kondensat abgeführt werden, so wird das Absperrventil 8 kurz geschlossen, so dass der Druck in der Vorrichtung ansteigt und das Kondensat abfließen kann. Es kann in einem Sammelbehälter (nicht dargestellt) bevorratet werden, bis dieser entleert wird.

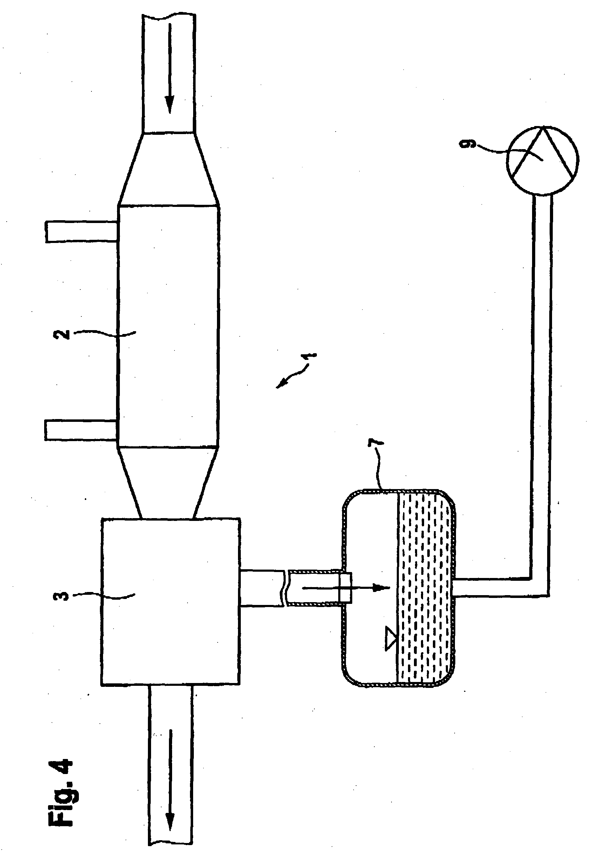

Gemäß dem dritten, in Fig. 4 dargestellten Ausführungsbeispiel, welches im Wesentlichen dem ersten Ausführungsbeispiel entspricht, ist nach dem Sammelbehälter 7 eine Pumpe 9 angeordnet, welche bei Erreichen eines bestimmten Füllstandes des Sammelbehälters 7 automatisch betätigt wird, so dass, insbesondere im Falle einer Niederdruck-Abgasrückführung, die mit einem unter dem Umgebungsniveau liegenden Druck verbunden ist, kein Stoppen des Abgasstroms wie beim zweiten Ausführungsbeispiel erforderlich ist, um den Unterdruck im Sammelbehälter 7 auf Umgebungsniveau anzuheben.

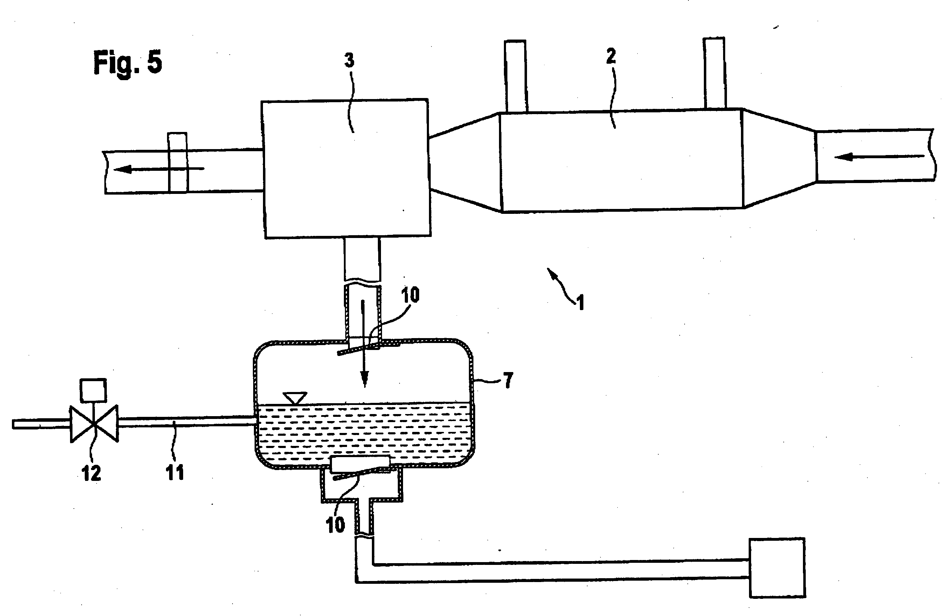

Eine weitere Möglichkeit einer Druckerhöhung im Sammelbehälter 7 ist gemäß dem in Fig. 5 dargestellten vierten Ausführungsbeispiel das Vorsehen zweier Ventile 10 am Kondensateinlass und Kondensatauslass desselben und eines dünnen Schlauchs 11 mit einem Regelventil 12, welcher den Sammelbehälter 7 mit der Hochdruckseite der Ladeluftleitung verbindet, so dass bei Öffnen des Regelventils 12 automatisch das Ventil 10 am Kondensateinlass geschlossen wird, der Druck im Sammelbehälter 7 ansteigt und bei Erreichen eines gegenüber der Umgebung erhöhten Druckniveaus das zweite Ventil 10 am Kondensatauslass automatisch öffnet, so dass das Kondensat abgeführt werden kann.

Natürlich sind auch andere Varianten zur Druckerhöhung im Sammelbehälter möglich, um das Kondensat abzuführen.

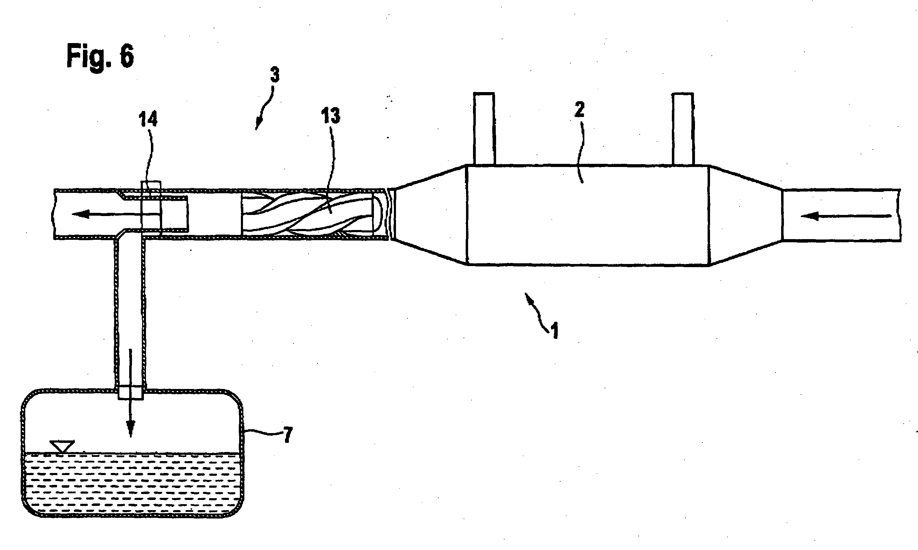

Gemäß dem in Fig. 6 dargestellten fünften Ausführungsbeispiel ist ein Turbulenzerzeuger 13 in Verbindung mit einem nachgeordneten ringförmigen Kanal 14 als Kondensatabscheider 3 in die Leitung nach dem Abgaskühler 2 integriert. Durch den Turbulenzerzeuger 13 wird der Abgasstrom mit einer Drehbewegung überlagert, so dass wiederum die sich auf Grund der verringerten Temperatur nach dem Abgaskühler 2 bildenden Kondensattröpfchen nach außen getragen und an der Wand abgelagert werden. Durch die Geschwindigkeitskomponente des Abgasstroms in Längsrichtung wird das Kondensat in Längsrichtung mitgeführt und gelangt so in den Kanal 14, wo es nach unten abgeführt wird und sich entsprechend dem ersten Ausführungsbeispiel in einem Sammelbehälter 7 sammelt. Zum Leeren des Sammelbehälters 7, insbesondere im Falle einer Niederdruck-Abgasrückführung, sind beispielsweise Maßnahmen entsprechend den zuvor beschriebenen Ausführungsbeispielen möglich.

Die Anordnung des Kondensatabscheiders muss nicht notwendigerweise direkt nach dem Abgaskühler sein. Beispielsweise ist auch eine Anordnung nach einem nachfolgenden Ladeluftkühler sinnvoll, insbesondere wenn die Temperatur den Taupunkt erst dort erreicht oder unterschreitet, so dass in diesem Fall die Ladeluft gekühlt wird, welche aus der Ansaugluft und dem rückgeführten Abgas besteht. Entsprechend kann prinzipiell auch die reine Ansaugluft getrocknet werden.

Gemäß einem nicht in der Zeichnung dargestellten sechsten Ausführungsbeispiel ist als Kondensatabscheider ein Filter nach dem Abgaskühler angeordnet, welcher ein Kunststoffvlies aufweist. Das hieran ausbildende Kondensat sammelt sich und läuft nach unten ab, wo es in einem Sammelbehälter gesammelt wird.

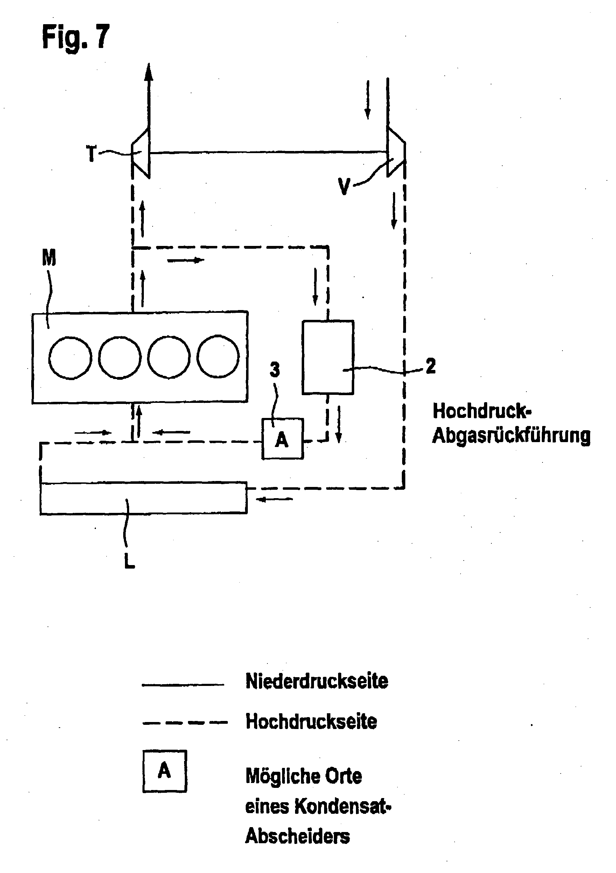

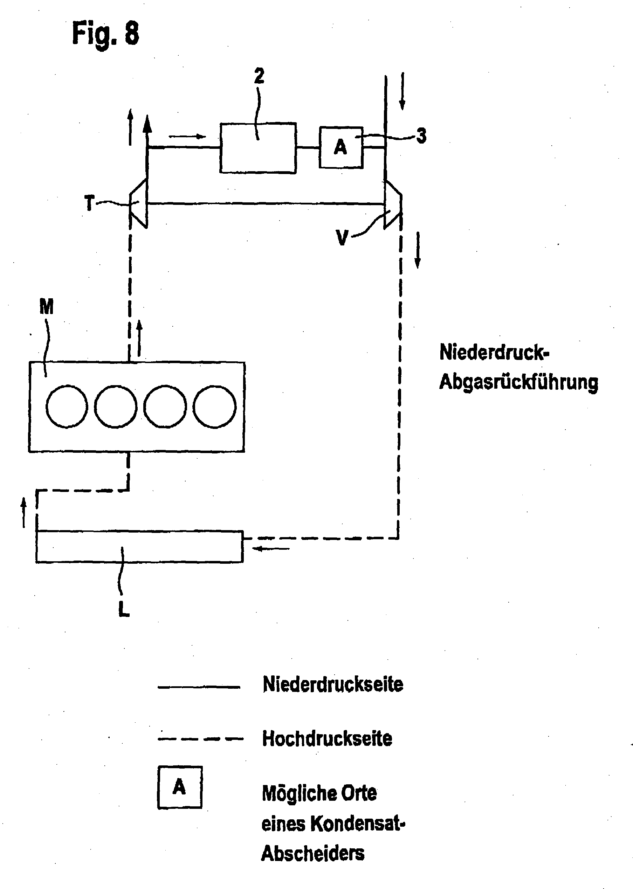

In den Figuren 7 und 8 sind Beispiele für eine mögliche Anordnung eines Kondensatabscheiders 3 für den Fall einer Hochdruck-Abgasrückführung (Fig. 7) und für den Fall einer Niederdruck-Abgasrückführung (Fig. 8) dargestellt. Hierbei kann die Ausgestaltung in allen Fällen entsprechend den zuvor beschriebenen Ausführungsbeispielen erfolgen. Die Leitungen der Niederdruckseite sind in den Figuren 7 und 8 durch dicke durchgezogene Linien dargestellt, die der Hochdruckseite durch gestrichelte Linien. Die Strömungsrichtungen sind jeweils durch Pfeile verdeutlicht.

Gemäß der in Fig. 7 dargestellten Hochdruck-Abgasrückführung erfolgt die Abzweigung des rückzuführenden Abgases von dem vom Motor M kommenden Abgasstrom hochdruckseitig, also vor einer Druckabsenkung. Die Ansaugluft wird in einem Verdichter V verdichtet, durchströmt einen Ladeluftkühler L und anschließend wird ihr das rückgeführte, gekühlte und nach dem Durchströmen des Kondensatabscheiders 3 trockene Abgas zugeführt. Anschließend wird der Ladeluftstrom dem Motor M zugeführt.

Fig. 8 zeigt ein Beispiel einer Niederdruck-Abgasrückführung, wobei das rückzuführende Abgas von dem vom Motor M kommenden Abgasstrom niederdruckseitig, also nach einer Druckabsenkung, abgezweigt wird. Es wird, um den Verdichter V und den nachfolgenden Ladeluftkühler L nicht zu schädigen und vor Korrosion zu schützen, durch den Abgas-Kühier 2 und den Kondensatabscheider 3 geführt und erst anschließend der Ansaugluft zugeführt. Der nunmehr durch das rückgeführte Abgas und die Ansaugluft gebildete Ladeluftstrom wird im Ladeluftkühler L gekühlt und dem Motor M zugeführt.

Um die Massenstromabhängigkeit und die für den Einbau benötigte zusätzliche Bautiefe eines Zyklonabscheiders zu umgehen, kann gemäß dem siebten und achten Ausführungsbeispiel als Kondensatabscheider 3 ein Fliehkraftabscheider mit einem rotierenden Verdränger- oder Schleuderkörper 20 vorgesehen sein, wobei vorliegend der Verdränger- oder Schleuderkörper 20 auf der verlängert ausgebildeten Welle 21 des Turboladers, auf welcher auch das Verdichterlaufrad 22 angeordnet ist, vor dem Eintritt in den Verdichter V angebracht ist. Auf diese Weise ist die Drehzahl des Fliehkraftabscheiders gekoppelt an die Drehzahl des Verdichterlaufrads 22, welche in der Regel 120000 bis 150000 U/min beträgt. Der Kondensattropfen führende Ladeluftstrom trifft auf den Verdränger- oder Schleuderkörper 20, so dass eine Umlenkung der Strömung erzwungen wird, so dass ein Großteil der Kondensattropfen sich am Verdränger- oder Schleuderkörper 20 ablagern und von diesem in Folge der hohen Drehzahl nach außen geschleudert werden, wo sie sich sammeln und in Richtung Kondensatablauf 5 strömen. Die Umlenkung des Ladeluftstroms auf Grund des Verdränger- oder Schleuderkörpers 20 in Verbindung mit dem Verdichtereintritt ist hierbei geometrisch derart gestaltet, dass auch weitere Kondensattropfen abgeschieden werden, die sich nicht am Verdränger- oder Schleuderkörper 20 abgelagert haben.

Gemäß dem in Fig. 9 dargestellten siebten Ausführungsbeispiel für einen Kondensatabscheider ist der Verdränger- oder Schleuderkörper 20 napfartig ausgebildet, wobei die Öffnung in Richtung Verdichter V zeigt. Auf Grund der Z-artigen Umlenkung des Ladeluftstroms, vorliegend um 2 x ca. 180°, werden die meisten Kondensattropfen abgelagert, bevor die Ladeluft in den Verdichter V gelangt. Der vorliegend aus einer Aluminiumlegierung gefertigte Verdränger- oder Schleuderkörper 20 ist endseitig auf die Welle 21 aufgesteckt und mit derselben verlötet.

Fig. 10 zeigt einen Verdränger- oder Schleuderkörper 20 für eine radiale Kondensatabführung gemäß dem achten Ausführungsbeispiel für einen Kondensatabscheider 3. Hierbei wird die Luft um ca. 90° nach außen umgelenkt, so dass die Kondensattropfen auf den Verdränger- oder Schleuderkörper 20 treffen, von dem sie in Folge der Fliehkraft mit hoher kinetischer Energie nach außen in einen ringförmigen zum Kondensatablauf 5 führenden Kanal geschleudert werden, der einen schematisch angedeuteten Ventilmechanismus 23 aufweist, welcher die mit hoher kinetischer Energie auftreffenden Kondensattropfen durchlässt, aber einen Kondensatrückfluss in den Verdichterraum verhindert. Der vorliegend aus Kunststoff gefertigte Verdränger- oder Schleuderkörper 20 ist endseitig auf die Welle 21 aufgesteckt und mit derselben verklebt, wobei als zusätzliche Sicherung das Wellenende einen sechskantartige Gestalt und der Verdränger- oder Schleuderkörper 20 eine entsprechende Innenform aufweisen.

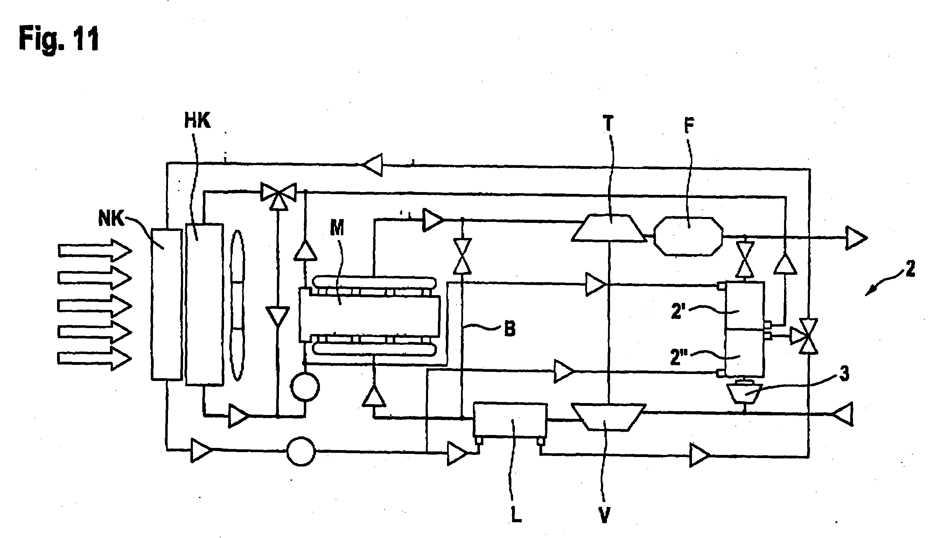

In Fig. 11 ist eine Niederdruck-Abgasrückführung mit zweistufiger Kühlung des rückgeführten Abgases (Abgaskühler 2) zusätzlich zur (vorliegend) einstufigen Ladeluftkühlung (Ladeluftkühler L) dargestellt. Das vom Motor M kommende Abgas durchströmt hierbei die Turbine T und in entspanntem, abgekühltem Zustand ein nachfolgend angeordnetes Filter F, mit Hilfe dessen Partikel aus dem Abgas entfernt werden. An einer Verzweigung kann ventilgesteuert ein Teil des von Partikeln gereinigten Abgases rückgeführt werden, der Rest des Abgases gelangt durch den Auspuff nach außen. Die Abgasrückführmenge wird hierbei durch das sich einstellende Druckgefälle von Abgasgegendruck und Ansaugunterdruck bestimmt, so dass mit einfachen Mitteln hohe Abgasrückführmengen möglich sind.

Der rückgeführte Teil des Abgases wird durch einen zweistufigen Abgaskühler 2 wobei in der ersten Stufe 2' eine Vorkühlung durch das Motor-Kühlmittel, das in einem ansonsten herkömmlich ausgebildeten MotorKühlkreislauf zirkuliert, erfolgt. In der zweiten Stufe 2" erfolgt bei Bedarf eine weitere Absenkung der Abgastemperatur. Die zweite Stufe 2" ist Teil eines Niedertemperaturkühlkreislaufs. Dieser weist einen luftgekühlten Niedertemperatur-Kühler NK, dem im Luftstrom nachfolgend der das Motor-Kühlmittel kühlenden Hochtemperatur-Kühler HK angeordnet ist, einen Kompressor K zum Umwälzen des Kühl- oder Kältemittels und in parallelgeschalteten Zweigen einen Ladeluftkühler L und die zweite Stufe 2" des Abgaskühlers 2 auf, wobei die Kühl- oder Kältemittelverteilung mit Hilfe von Ventilen geregelt ist.

Femer ist für den Ladeluftstrom oder einen Teil hiervon ein ventilgesteuert bei Bedarf zur Verfügung stehender Bypass B vorgesehen, welcher parallel zum Motor M verläuft und Ladeluft an demselben vorbei führen kann.

Wie aus Fig. 11 ersichtlich, ist nach der zweiten Stufe 2" des Abgaskühlers 2 ein Kondensatabscheider 3 vorgesehen, mit Hilfe dessen Kondensat aus dem kalten rückgeführten Abgas entfernt werden kann bevor es mit der angesaugten Frischluft vermischt wird. Vorliegend ist - obwohl nicht näher dargestellt - direkt vor dem Verdichter V ein weiterer Kondensatabscheider angeordnet, insbesondere ein Fliehkraftabscheider wie zuvor unter Bezugnahme auf die Figuren 9 oder 10 beschrieben.

Zur Entsorgung des sich ansammelnden Kondensats, welches als Gefahrstoff einzustufen ist und deshalb nicht an Bord eines Fahrzeugs gespeichert werden kann, ist eine thermische Kondensatentsorgung 30 vorgesehen. Hierbei lassen sich mit Hilfe eines mehrstufigen thermischen Reaktors die gebildeten Säuren in unkritische Komponenten umwandeln. Zudem lässt sich das gebildete Kondensat für die Vorkühlung des rückgeführten Abgases nutzen.

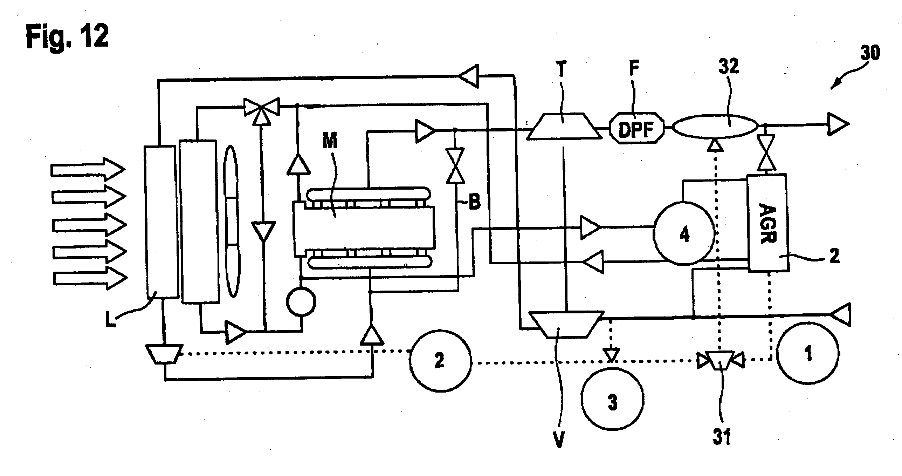

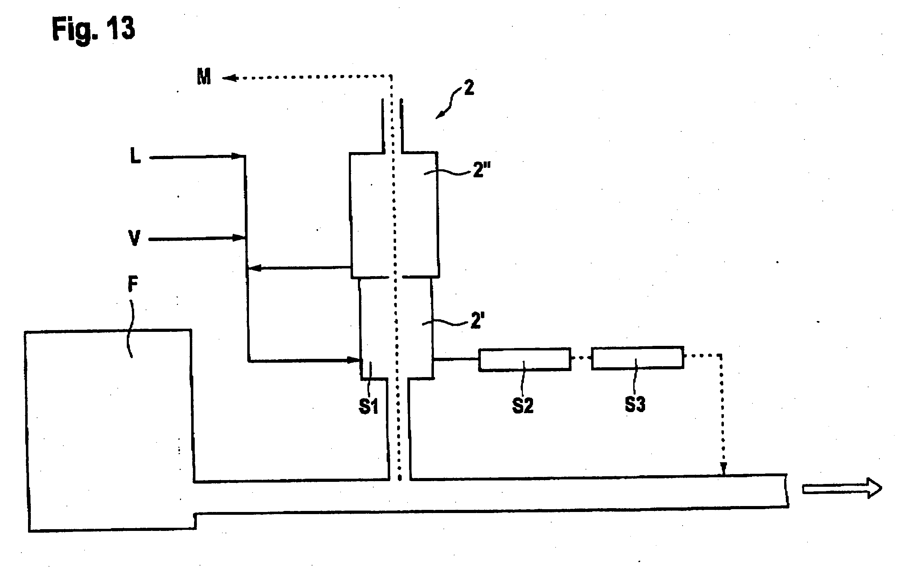

Ein Beispiel der Anordnung einer derartigen Kondensatentsorgung 30 in einer Niederdruck-Abgasrückführung ist in den Figuren 12 und 13 schematisch dargestellt. Hierbei wird Kondensat, das sich am Abgaskühler 2, vor dem Verdichter V und im oder nach dem Ladeluftkühler L sammelt über Leitungen zu einem zentralen Kondensatsammler 31 geführt, von dem aus es über eine Leitung einem thermischen Reaktor 32 zugeführt wird, der Teil der thermischen Kondensatentsorgung 30 ist. Der thermische Reaktor 32 ist nachfolgend an das Filter F in einem Auspuffkrümmer des Motors integriert angeordnet. Die das Kondensat führenden Leitungen, insbesondere die Leitung vom Kondensatsammler 31 zum thermischen Reaktor 32, weisen vorliegend einen Querschnitt auf, welcher eine Förderung des Kondensats in Folge von Kapillarkräften ermöglicht, so dass auf Pumpen verzichtet werden kann. Zudem ist vorliegend keine wesentliche Speicherung des anfallenden Kondensats im Motorsystem vorgesehen, sondern das Kondensat wird weitestgehend direkt weitergeleitet zum thermischen Reaktor 32, hierin erhitzt und anschließend abgegeben.

Wie aus Fig. 13 ersichtlich, wird das Kondensat in einer ersten Stufe S1 zur Kühlung des rückgeführten Abgases verwendet, wofür ein entsprechend ausgebildeter Wärmetauscher die erste Stufe 2' des Abgaskühlers 2 bildet, also vor dem Eintritt des eigentlichen Abgaskühlers 2 angeordnet ist, so dass im Wesentlichen die gesamte Enthalpie-Änderung des Kondensats für die erste Stufe S1 der Abkühlung des Abgases genutzt werden kann. Hierbei erfolgt eine Erwärmung des Kondensats. Für einen guten Wärmeübergang sind Rippen oder entsprechende, die Oberflächen vergrößernde Maßnahmen zur Optimierung der Wärmeübertragung der Abgaswärme auf das Kondensat vorgesehen.

In einer zweiten Stufe S2 erfolgt die Verdampfung des erwärmten Kondensats, wobei die weitere Erwärmung vorliegend mittels eines selbstregelnden PTC-Heizelements (Positive Thermal Coefficient) auf ca. 250 bis 300°C erfolgt, und in einer dritten Stufe S3 erfolgt eine Nacherhitzung auf 350 bis 450°C. Dabei ist unabhängig vom Motorbetriebszustand ausreichend Energie vorhanden, um das PTC-Heizelement zu betätigen. Femer ist das PTC-Heizelement derart ausgebildet, dass es selbsttätig abregelt, wenn kein Kondensat angefallen ist. Die Resterhitzung des verdampften Kondensats in der dritten Stufe erfolgt vorliegend mit Hilfe eines elektrisch beheizten Rohrheizkörpers, der eine Oberflächentemperatur von 350 bis 450°C und Einbauten oder Füllkörper mit großer Oberfläche und ggf. katalytischer Wirkung aufweist.

Auf Grund der Temperaturen der zweiten und dritten Stufe S2 und S3 zersetzt sich Salpetersäure in NO₂, N₂, H₂O und O₂ und Schwefelsäure bzw. schweflige Säure in H₂O und SO₂ bzw. SO₃ nach den folgenden Reaktionen:

4HNO₃ --> 4NO₂ + 2H₂O + O₂

4HNO₃ --> 2N₂ + 2H₂O + 5O₂

H₂SO₄ -->SO₃ + H₂O

H₂SO₃ -->SO₂ + H₂O

Nach der dritten Stufe S3 wird das nunmehr ungefährliche Kondensat dem Abgasstrom zugeführt und über den Auspuff entsorgt.

Um sicherzustellen, dass keine unzulässigen MAK-Werte auftreten, kann ein Zusatzgebläse vorgesehen sein, welches unabhängig von der Funktion der Kondensatentsorgung 30 eine Einhaltung der Grenzwerte sicherstellt.

## Patentansprüche

1. Anordnung, insbesondere Turboladeranordnung eines Kraftfahrzeugs mit einem Verbrennungsmotor, mit Abgasrückführung, wobei die Anordnung einen Abgaskühler (2) und einen Ladeluftkühler (L) zur Kühlung von rückgeführtem Abgas und/oder Ladeluft und ein Verdichter (V) zur Verdichtung der Ladeluft aufweist, **dadurch gekennzeichnet, dass** die Anordnung mindestens einen Kondensatabscheider (3) und mindestens eine thermische Kondensatentsorgung (30) aufweist, wobei der Kondensatabscheider vor dem Ladeluftverdichter angeordnet ist.

2. Anordnung nach Anspruch 1, **dadurch gekennzeichnet, dass** die thermische Kondensatentsorgung (30) mehrstufig ausgebildet ist.

3. Anordnung nach Anspruch 1 oder 2, **dadurch gekennzeichnet, dass** die thermische Kondensatentsorgung (30) mit mehreren Kondensatabscheidern (3) über Leitungen verbunden ist.

4. Anordnung nach einem der vorhergehenden Ansprüche, **dadurch gekennzeichnet, dass** eine erste Stufe (S1) der Kondensatentsorgung (30) einen Wärmetauscher aufweist, in welchem das Kondensat vorgewärmt wird.

5. Anordnung nach einem der vorhergehenden Ansprüche, **dadurch gekennzeichnet, dass** eine zweite Stufe (S2) der Kondensatentsorgung (30) ein Heizelement, insbesondere ein PTC-Heizelement, aufweist, mit dessen Hilfe das Kondensat verdampft wird.

6. Anordnung nach einem der vorhergehenden Ansprüche, **dadurch gekennzeichnet, dass** eine dritte Stufe (S3) der Kondensatentsorgung (30) eine elektrische Heizung aufweist, mit deren Hilfe das dampfförmige Kondensat weiter erhitzt wird.

7. Anordnung nach Anspruch 6, **dadurch gekennzeichnet, dass** die elektrische Heizung die Oberfläche vergrößernde Einbauten aufweist.

8. Anordnung nach einem der vorhergehenden Ansprüche, **dadurch gekennzeichnet, dass** der Kondensatabscheider (3) ein Fliehkraft- oder Zyklonabscheider ist.

9. Anordnung nach einem der vorhergehenden Ansprüche, **dadurch gekennzeichnet, dass** der Kondensatabscheider (3) einen Turbulenzerzeuger (13) aufweist, der den Abgasstrom oder den Ladeluftstrom in Rotation versetzt, so dass sich zumindest ein Teil der Kondensattröpfchen an der Wand ablagert.

10. Anordnung nach Anspruch 9, **dadurch gekennzeichnet, dass** nach dem Turbufenzerzeuger (13) ein ringförmiger Kanal (14) mit einer Auslauföffnung für das Kondensat angeordnet ist.

11. Anordnung nach einem der Ansprüche 1 bis 7, **dadurch gekennzeichnet, dass** der Kondensatabscheider (3) ein Filter ist.

12. Anordnung nach einem der vorhergehenden Ansprüche, **dadurch gekennzeichnet, dass** eine mehrstufige Kondensatabscheidung vorgesehen ist.

13. Anordnung nach einem der vorhergehenden Ansprüche, **dadurch gekennzeichnet, dass** am Kondensatablauf (5) ein Sammelbehälter (7) angeordnet ist.

14. Anordnung nach einem der vorhergehenden Ansprüche, **dadurch gekennzeichnet, dass** ein Ventil (8) zur Drosselung des Abgasstroms oder des Ladeluftstroms vorgesehen ist.

15. Anordnung nach einem der vorhergehenden Ansprüche, **dadurch gekennzeichnet, dass** eine Pumpe (9) zum Absaugen des gesammelten Kondensats vorgesehen ist.

16. Anordnung nach einem der vorhergehenden Ansprüche, **dadurch gekennzeichnet, dass** der Kondensatabscheider (3) direkt nach dem Abgaskühler (2), angeordnet ist.

17. Anordnung nach einem der vorhergehenden Ansprüche, **dadurch gekennzeichnet, dass** der Kondensatabscheider (3) in einem Bereich angeordnet ist, in welchem die Temperatur des Abgasstroms oder des Ladeluftstroms den Taupunkt erreicht oder unterschreitet.

18. Anordnung nach einem der vorhergehenden Ansprüche, **dadurch gekennzeichnet, dass** der Kondensatabscheider (3) mit der Welle (21) des Verdichters (V) gekoppelt oder fest verbunden ist.

19. Anordnung nach Anspruch 18, **dadurch gekennzeichnet, dass** der Kondensatabscheider (3) einen Verdränger- oder Schleuderkörper (20) aufweist, der auf der Welle (21) drehfest angeordnet oder durch einen Bereich der Welle (21) gebildet ist.

20. Anordnung nach Anspruch 19, **dadurch gekennzeichnet, dass** der Verdränger- oder Schleuderkörper (20) in normaler Strömungsrichtung der Ladeluft vor dem Laufrad (22) des Verdichters (V) angeordnet ist und den Ladeluftstrom um mindestens 90°, vorzugsweise um zweimal 180°, umlenkt.

21. Anordnung nach einem der Ansprüche 17 bis 20, **dadurch gekennzeichnet, dass** der Kondensatabscheider (3) in dem Verdichtergehäuse angeordnet und/oder in das Verdichtergehäuse integriert ausgebildet ist.

22. Verfahren zum Betreiben eines Turboladers, insbesondere eines Kraftfahrzeugs mit einem Verbrennungsmotor, bei welchem Abgas rückgeführt und der Ladeluft zugesetzt wird, **dadurch gekennzeichnet, dass** das Kondensat vor einem Ladeluftverdichter abgeschieden und verdampft wird.

23. Verfahren nach Anspruch 22, **dadurch gekennzeichnet, dass** das Kondensat auf eine Temperatur von 350 bis 450°C erhitzt wird.

24. Verfahren nach Anspruch 22 oder 23, **dadurch gekennzeichnet, dass** das Kondensat in einer ersten Stufe (S1) in einem Wärmetauscher vorgewärmt wird.

25. Verfahren nach einem der Ansprüche 22 bis 24, **dadurch gekennzeichnet, dass** das Kondensat in einer zweiten Stufe (S2) verdampft wird.

26. Verfahren nach einem der Ansprüche 22 bis 25, **dadurch gekennzeichnet, dass** das Kondensat mit Hilfe elektrischer Energie erhitzt wird.

27. Verfahren nach einem der Ansprüche 22 bis 26, **dadurch gekennzeichnet, dass** das Kondensat mittels der thermischen Kondensatentsorgung (30) verdampft wird, die im Kondensat enthaltenen Säuren umgewandelt werden und der entstandene Dampf und/oder die Gase wieder dem Abgasstrom zugeführt werden.

## Claims

1. Arrangement, in particular turbocharge arrangement of a motor vehicle with an internal combustion engine, having exhaust gas recirculation, the arrangement having a recirculated exhaust gas cooler (2) and an intercooler (L) for cooling recirculated exhaust gas and/or charge air, and a compressor (V) for compressing the charge air,
**characterised in that**
the arrangement has at least one condensate separator (3) at last least one thermal condensate removal device (30), the condensate separator being positioned upstream of the intercooler.

2. Arrangement in accordance with claim 1,
**characterised in that**
the thermal condensate removal device (30) has multiple stages.

3. Arrangement in accordance with claim 1 or 2,
**characterised in that**
the thermal condensate removal device (30) is connected to a plurality of condensate separators by lines.

4. Arrangement in accordance with one of the preceding claims,
**characterised in that**
a first stage (S1) of the condensate removal device (30) has a heat exchanger in which the condensate is pre-warmed.

5. Arrangement in accordance with one of the preceding claims,
**characterised in that**
a second stage (S2) of the condensate removal device (30) has a heating element, in particular a PTC heating element, with the aid of which the condensate is evaporated.

6. Arrangement in accordance with one of the preceding claims,
**characterised in that**
a third stage (S3) of the condensate removal device (30) has an electrical heating device with the aid of which the vaporized condensate is further heated.

7. Arrangement in accordance with claim 6,
**characterised in that**
the electrical heating device has built-in elements which increase its surface area.

8. Arrangement in accordance with one of the preceding claims,
**characterised in that**
the condensate separator (3) is a centrifugal or cyclone separator.

9. Arrangement in accordance with one of the preceding claims,
**characterised in that**
the condensate separator (3) has a turbulence generator (13) which sets the flow of exhaust gas or charge air in rotation such that at least some of the condensate droplets are deposited on the wall.

10. Arrangement in accordance with claim 9,
**characterised in that**
an annular channel (14) with a discharge opening for the condensate is positioned downstream of the turbulence generator (13).

11. Arrangement in accordance with one of claims 1 to 7,
**characterised in that**
the condensate separator (3) is a filter.

12. Arrangement in accordance with one of the preceding claims,
**characterised in that**
a multi-stage condensate separation system is provided.

13. Arrangement in accordance with one of the preceding claims,
**characterised in that**
a collecting vessel (7) is positioned at the condensate discharge point (5).

14. Arrangement in accordance with one of the preceding claims,
**characterised in that**
a valve (8) is provided for throttling the exhaust gas flow or the charge-air flow.

15. Arrangement in accordance with one of the preceding claims,
**characterised in that**
a pump (9) is provided to take up the collected condensate.

16. Arrangement in accordance with one of the preceding claims,
**characterised in that**
the condensate separator (3) is provided immediately downstream of the exhaust gas recirculation cooler.

17. Arrangement in accordance with one of the preceding claims,
**characterised in that**
the condensate separator (3) is positioned in an area in which the temperature of the exhaust gas flow or the charge air has reached or fallen below the dew point.

18. Arrangement in accordance with one of the preceding claims,
**characterised in that**
the condensate separator (3) is coupled or fixed solidly to the shaft (21) of the compressor (V).

19. Arrangement in accordance with claim 18,
**characterised in that**
the condensate separator (3) has a displacement or centrifugal body (20) which is positioned on the shaft (21) such that it is unable to rotate or takes the form of an area of the shaft (21).

20. Arrangement in accordance with claim 19,
**characterised in that**
when the charge air is flowing in the normal direction, the displacement or centrifugal body (20) is positioned upstream of the wheel (22) of the compressor (V) and deflects the charge-air flow by at least 90°, preferably by twice 180.

21. Arrangement in accordance with one of claims 17 to 20,
**characterised in that**
the condensate separator (3) is positioned and/or integrated in the compressor housing.

22. Process for operating a turbocharger, in particular of a motor vehicle with an internal combustion engine, in which exhaust gas is rercirculated and added to the charge air,
**characterised in that**
the condensate is separated and evaporated upstream of a charge-air compressor.

23. Process in accordance with claim 22,
**characterised in that**
the condensate is heated to a temperature of 350 to 450°C.

24. Process in accordance with claim 22 or 23,
**characterised in that**
in a first stage (S1) the condensate is heated in a heat exchanger.

25. Process in accordance with one of claims 22 to 24,
**characterised in that**
the condensate is evaporated in a second stage (S2).

26. Process in accordance with one of claims 22 to 25,
**characterised in that**
the condensate is heated with the aid of electrical energy.

27. Process in accordance with one of claims 22 to 26,
**characterised in that**
the condensate is evaporated by means of the thermal condensate removal device (30), the acids contained in the condensate are converted and the vapour and/or gases produced are fed back to the exhaust gas flow.

## Revendications

1. Agencement, en particulier agencement de turbocompresseur d'un véhicule automobile équipé d'un moteur à combustion interne, d'un recyclage des gaz d'échappement, où l'agencement présente un refroidisseur de gaz d'échappement (2) et un refroidisseur d'air de suralimentation (L) servant au refroidissement de gaz d'échappement recyclés et / ou de l'air de suralimentation, et un compresseur (V) servant à la compression de l'air de suralimentation,
**caractérisé en ce que** l'agencement présente au moins un séparateur de condensat (3) et au moins un dispositif thermique (30) d'élimination du condensat, où le séparateur de condensat est disposé en amont du compresseur d'air de suralimentation.

2. Agencement selon la revendication 1, **caractérisé en ce que** le dispositif thermique (30) d'élimination du condensat est configuré à plusieurs étages.

3. Agencement selon la revendication 1 ou 2, **caractérisé en ce que** le dispositif thermique (30) d'élimination du condensat est raccordé, par des conduites, à plusieurs séparateurs de condensat (3).

4. Agencement selon l'une quelconque des revendications précédentes, **caractérisé en ce qu'**un premier étage (S1) du dispositif d'élimination du condensat (30) présente un échangeur de chaleur dans lequel le condensat est préchauffé.

5. Agencement selon l'une quelconque des revendications précédentes, **caractérisé en ce qu'**un deuxième étage (S2) du dispositif d'élimination du condensat (30) présente un élément chauffant, en particulier un élément chauffant à coefficient de température positif (CTP), à l'aide duquel le condensat est évaporé.

6. Agencement selon l'une quelconque des revendications précédentes, **caractérisé en ce qu'**un troisième étage (S3) du dispositif d'élimination du condensat (30) présente un chauffage électrique à l'aide duquel le condensat, à l'état de vapeur, continue à être chauffé.

7. Agencement selon la revendication 6, **caractérisé en ce que** le chauffage électrique présente des éléments de montage augmentant la surface.

8. Agencement selon l'une quelconque des revendications précédentes, **caractérisé en ce que** le séparateur de condensat (3) est un séparateur à force centrifuge ou à cyclone.

9. Agencement selon l'une quelconque des revendications précédentes, **caractérisé en ce que** le séparateur de condensat (3) présente un générateur de turbulences (13) qui déplace en rotation le flux de gaz d'échappement ou le flux d'air de suralimentation, de sorte qu'au moins une partie des gouttelettes du condensat se dépose sur la paroi.

10. Agencement selon la revendication 9, **caractérisé en ce qu'**un conduit (14) de forme annulaire comportant une ouverture de sortie pour le condensat est disposé en aval du générateur de turbulences (13).

11. Agencement selon l'une quelconque des revendications 1 à 7, **caractérisé en ce que** le séparateur de condensat (3) est un filtre.

12. Agencement selon l'une quelconque des revendications précédentes, **caractérisé en ce qu'**il est prévu un séparateur de condensat à plusieurs étages.

13. Agencement selon l'une quelconque des revendications précédentes, **caractérisé en ce qu'**un bac collecteur (7) est disposé au niveau de la sortie (5) du condensat.

14. Agencement selon l'une quelconque des revendications précédentes, **caractérisé en ce qu'**il est prévu une soupape (8) servant à l'étranglement du flux de gaz d'échappement ou du flux d'air de suralimentation.

15. Agencement selon l'une quelconque des revendications précédentes, **caractérisé en ce qu'**il est prévu une pompe (9) servant à l'aspiration du condensat accumulé.

16. Agencement selon l'une quelconque des revendications précédentes, **caractérisé en ce que** le séparateur de condensat (3) est disposé directement en aval du refroidisseur de gaz d'échappement (2).

17. Agencement selon l'une quelconque des revendications précédentes, **caractérisé en ce que** le séparateur de condensat (3) est disposé dans une zone dans laquelle la température du flux de gaz d'échappement ou du flux d'air de suralimentation atteint le point de rosée ou est inférieure à celui-ci.

18. Agencement selon l'une quelconque des revendications précédentes, **caractérisé en ce que** le séparateur de condensat (3) est couplé à l'arbre (21) du compresseur (V) ou raccordé fixement à celui-ci.

19. Agencement selon la revendication 18, **caractérisé en ce que** le séparateur de condensat (3) présente un corps volumétrique ou centrifuge (20) qui, solidaire en rotation, est disposé sur l'arbre (21) ou bien formé par une zone de l'arbre (21).

20. Agencement selon la revendication 19, **caractérisé en ce que** le corps volumétrique ou centrifuge (20) est disposé, dans la direction normale d'écoulement de l'air de suralimentation, en amont de la roue à aubes (22) du compresseur (V), et dévie le flux d'air de suralimentation, d'au moins 90°, de préférence de deux fois 180°.

21. Agencement selon l'une quelconque des revendications 17 à 20, **caractérisé en ce que** le séparateur de condensat (3) est disposé dans le carter du compresseur et / ou configuré en étant intégré au carter du compresseur.

22. Procédé de fonctionnement d'un turbocompresseur, en particulier d'un véhicule automobile équipé d'un moteur à combustion interne dans lequel des gaz d'échappement sont recyclés et ajoutés à l'air de suralimentation,
**caractérisé en ce que** le condensat est séparé et évaporé en amont d'un compresseur d'air de suralimentation.

23. Procédé selon la revendication 22, dans lequel le condensat est chauffé à une température comprise entre 350°C et 450°C.

24. Procédé selon la revendication 22 ou 23, **caractérisé en ce que** le condensat est préchauffé dans un échangeur de chaleur, dans un premier étage (S1).

25. Procédé selon l'une quelconque des revendications 22 à 24, **caractérisé en ce que** le condensat est évaporé dans un deuxième étage (S2).

26. Procédé selon l'une quelconque des revendications 22 à 25, **caractérisé en ce que** le condensat est chauffé à l'aide de l'énergie électrique.

27. Procédé selon l'une quelconque des revendications 22 à 26, **caractérisé en ce que** le condensat est évaporé au moyen du dispositif thermique (30) d'élimination du condensat, **en ce que** les acides contenus dans le condensat sont transformés et **en ce que** la vapeur obtenue et / ou les gaz est fournie ou sont fournis, à nouveau, au flux de gaz d'échappement.
